## Europäisches Patentamt
## European Patent Office
## Office européen des brevets

(19)

(11) Veröffentlichungsnummer: **0 129 113**
**B1**

(12) # EUROPÄISCHE PATENTSCHRIFT

(45) Veröffentlichungstag der Patentschrift:
14.10.87

(51) Int. Cl.⁴: **G 21 C 17/00**, G 01 N 1/24

(21) Anmeldenummer: **84106100.5**

(22) Anmeldetag: **29.05.84**

(54) **Probensammeleinrichtung für in der Umgebungsluft enthaltene gasförmige radioaktive Stoffe.**

(30) Priorität: **10.06.83 DE 3321092**

(43) Veröffentlichungstag der Anmeldung:
**27.12.84 Patentblatt 84/52**

(45) Bekanntmachung des Hinweises auf die Patenterteilung:
**14.10.87 Patentblatt 87/42**

(84) Benannte Vertragsstaaten:
**CH DE FR GB LI SE**

(56) Entgegenhaltungen:
**GB-A-2 037 180**
**GB-A-2 081 895**
**US-A-3 653 399**

**PATENTS ABSTRACTS OF JAPAN, Band 6, Nr. 262 (P-164) 1140 , 21. Dezember 1982; & JP - A - 57 156 532 (MITSUBISHI GENSHIRYOKU KOGYO K.K.) 27.09.1982**
**IEEE TRANSACTIONS ON NUCLEAR SCIENCE, Band NS-29, Nr. 1, Februar 1982, Seiten 722-725, IEEE, New York, US; L. HOLMES u.a.: "Swedish nuclear power station on-line isotopic stack monitoring system"**

(73) Patentinhaber: **Siemens Aktiengesellschaft Berlin und München, Wittelsbacherplatz 2, D-8000 München 2 (DE)**

(72) Erfinder: **Redmann, Eckhard, Dipl.- Ing., Holbeinstrasse 19, D-6000 Frankfurt 70 (DE)**
Erfinder: **Bleier, Alois, Dipl.- Ing., Kulmbacherstrasse 13, D-8520 Erlangen (DE)**

## Beschreibung

Die Erfindung bezieht sich auf eine Probensammeleinrichtung zum Sammeln des radioaktiven Kohlenstoffisotops $^{14}C$, welches in Form von $CO_2$ in der Abluft eines Kernkraftwerkes oder einer anderen kerntechnischen Anlage enthalten ist, gemäß Oberbegriff des Patentanspruchs 1.

Eine solche Probensammeleinrichtung ist durch die GB-A-2 081 895 bekannt, worauf weiter unten noch eingegangen wird. Nach den sicherheitstechnischen Regeln des kerntechnischen Ausschusses (KTA), Teil 1: Messung und Überwachung der Ableitung radioaktiver Stoffe mit der Kaminabluft bei bestimmungsgemäßem Betrieb (KTA 1503.1, Fassung 2/79) ist zur $^{14}C$-Überwachung ausgesagt, daß kontinuierlich Kohlendioxid-Proben aus der Kaminabluft zu nehmen und vierteljährlich auszuwerten sind. Zur Erfüllung dieser sicherheitstechnischen Auflage sind eine Reihe von Problemen zu lösen. Zunächst ist ein geeignetes Absorptionsverfahren zu wählen, welches gewährleistet, daß die im Absorbens gesammelten Mengen an radioaktivem Kohlendioxid, in einem Sammelgefäß aufgefangen, bequem aus der Probensammeleinrichtung entfernt und zu einem Labor transportiert werden können, wo sie auf einfache Weise qualitativ und quantitativ chemisch analysierbar sein sollen, um Rückschlüsse auf die in der Abluft enthaltene Menge an radioaktivem $^{14}C$ ziehen zu können. Die Überwachung in dem Überwachungszeitraum von einem Vierteljahr soll kontinuierlich sein; außerdem brauchen nur relativ kleine Mengenströme durch das Sammelgefäß hindurchgeleitet zu werden, denn es geht nicht um eine Abgasreinigung, sondern nur um eine Probennahme, um den Anteil an radioaktivem $^{14}C$ in der Abluft zu erfassen. Dabei ist besonders wichtig, daß während des Überwachungszeitraums die Probensammeleinrichtung möglichst automatisch ohne manuelle Operationen gefahren werden kann, das bedeutet, daß sie eigensicher arbeiten muß, damit im Störungsfalle (z. B. Ausfall der elektrischen Energie oder Ausfall einer Komponente, wie z. B. Gaspumpe oder Ventil) nicht die Probennahme in Frage gestellt wird, sondern eine Umschaltung von kranken Zweigen auf gesunde Zweige erfolgen kann. Ebenso soll ein kontinuierlicher Betrieb gewährleistet sein, wenn ein Sammelgefäß nach Ablauf des Überwachungs-Intervalls entnommen und ein neues eingefügt wird.

Bei der bekannten Probensammeleinrichtung nach der genannten GB-A-2 081 895 wird ein aus der Kaminabluft entnommener Gasstrom über Filter und eine Pumpe mehreren, d.h. mindestens zwei, einander parallel geschalteten Zweigen zugeführt, deren jeder ein Absperrventil und einen Wasser-Abscheider bzw. einen $CO_2$-Abscheider enthält. In den Figuren 2, 4 und 5 der genannten GB-A sind Ausführungsbeispiele dargestellt, bei denen jeder $CO_2$-Abscheidezweig aus zwei zueinander parallel geschalteten und abwechselnd einschaltbaren Sammelzweigen mit je einem Sammelgefäß besteht, wobei vor und hinter den Sammelgefäßen Vor- und Nachschaltventile angeordnet sind, mittels welchen ein Abtrennen des jeweiligen, mit $CO_2$-angereicherten Sammelgefäßes und das Einschalten eines frischen, aufnahmefähigen Sammelgefäßes ermöglicht ist. Nach Durchströmen der betreffenden Sammelzweige wird das von Wasser bzw. $CO_2$ entreicherte Meßgas wieder in den Abluftkamin zurückgeführt. Der Verzweigungspunkt liegt bei dieser bekannten Einrichtung hinter den Sammelzweigen, d.h., der gesamte, über Filter und Pumpe vom Abgaskamin angesaugte Gasstrom wird als Meßgasstrom den Sammelzweigen zugeführt, welche jeweils mit Mengenstrommessern versehen sind. Da eine einzige Meßgaspumpe allen Sammelzweigen gemeinsam ist, bedeutet dies, daß bei ihrem Ausfall auch die Probennahme unterbrochen werden muß. Da aber bei der $^{14}C$-Überwachung ein kontinuierlicher Zeitraum von 3 Monaten zu messen und auszuwerten ist, ist die bekannte Probensammeleinrichtung für diese Zwecke nicht geeignet. Ferner ist festzustellen, daß Durchflußmengenmesser, die nicht mit einem genauen oder genau einstellbaren Vordruck betrieben werden können, hinsichtlich der Meßgenauigkeit zu wünschen übrigen lassen.

Ausgehend von einer Probensammeleinrichtung der eingangs definierten Art liegt der Erfindung die Aufgabe zugrunde, diese so auszubilden, daß die geschilderten Probleme sicher beherrschbar sind, d.h., mit welcher insbesondere die folgenden Aufgaben lösbar sind:.
- kontinuierliche Überwachung der Abluft in einer kerntechnischen Anlage, insbesondere einem Kernkraftwerk, auf Gehalt an radioaktivem $^{14}C$ während des vorgeschriebenen Überwachungs-Intervalls, das gemäß KTA 1503.1 drei Monate beträgt, jedoch auch einen längeren oder kürzeren Zeitraum umfassen kann;
- zuverlässige Mengenstromerfassung der durch das eingeschaltete Sammelgefäß geleiteten Meßgasmenge und Festhalten des jeweiligen Mengenstrom-Integrals bei Störungen, wie z. B. Netzausfall;
- stoßfreie Umschaltung auf einen gesunden Ansaugzweig im Falle der Störung des gerade eingeschalteten Ansaugzweiges;
- hinreichend genaue Definition des Vordruckes für das dem Mengenstromzähler vorgeschaltete, auf konstanten Mengenstrom geregelte Stellventil.

Erfindungsgemäß wird bei einer Probensammeleinrichtung gemäß Oberbegriff des Anspruchs 1 der gestellte Aufgabenkomplex durch die im Kennzeichen des Anspruchs 1 angegebenen Merkmale gelöst. Vorteilhafte Weiterbildungen sind in den Unteransprüchen 2 bis 10 angegeben.

Die mit der Erfindung erzielbaren Vorteile sind vor allem und summarisch darin zu sehen, daß ein kontinuierlicher, vollautomatischer Betrieb der Probensammeleinrichtung in kerntechnischen Anlagen, insbesondere in Kernkraftwerken, ermöglicht ist, der sich vor allem durch kleine Entnahmemengen, einen hohen Grad der Eigensicherheit und Redundanz bei Pumpen und Sammelgefäßen und durch eine geringe Wartung auszeichnet. Von besonderer sicherheitstechnischer Relevanz ist die Anordnung und Ausbildung der Absorptions- und Sicherheitsflaschen gemäß den Ansprüchen 2 bis 5, weil damit unter anderem erreicht wird, daß die Absorberflüssigkeit (wässrige NaOH) auch im Falle eines Überdruckes auf der Abströmseite der Flaschenkolonne bzw. Flaschen-Reihenschaltung nicht nach außen treten kann (ein Austreten von NaOH im Falle eines Überdruckes auf der Zuströmseite der Flaschenkolonne ist durch die besondere Ausbildung der Absorberflasche ohnehin verhindert).

Im folgenden wird anhand eines in der Zeichnung dargestellten Ausfürungsbeispiels der Erfindung diese noch näher erläutert. Darin zeigt in vereinfachter Darstellung unter Fortlassung der für das Verständnis der Erfindung nicht erforderlichen Teile bzw. Schaltelemente:

Fig. 1 ein pneumatisches Schaltbild der Probensammeleinrichtung nach der Erfindung;

Fig. 2 eine Frontansicht auf die als Meßschrank ausgeführte Probensammeleinrichtung mit zwei Sammelzweigen, die einander parallel geschaltet sind und jeweils eine Absorptions- und vorgeschaltete Sicherheitsflasche enthalten, sowie mit frontseitiger Anzeige- und Bedienungsplatine; und

Fig. 3 den Schaltplan den elektrischen Meß- und Überwachungsschaltung in schematischer Blockdarstellung.

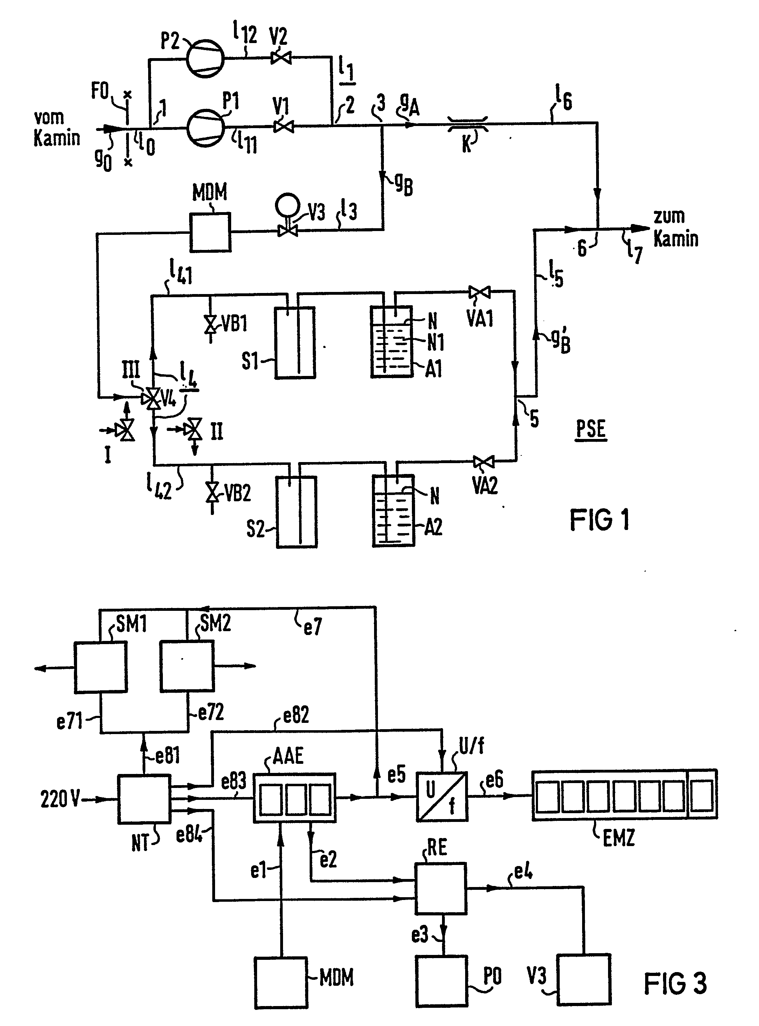

Der pneumatische Eingang der in Fig. 1 dargestellten und als Ganzes mit PSE bezeichneten Probensammeleinrichtung ist über die Ansaugleitung $l_0$ und ein vorgeschaltetes Feinfilter FO an den Abluftkamin eines Kernkraftwerkes oder allgemein einer kerntechnischen Anlage (Labor, Wiederaufarbeitungsanlage) angeschlossen. Die Ansaugleitung $l_0$ verzweigt sich in die beiden Ansaugzweige $l_{11}$, $l_{12}$, deren jeder eine Reiheschaltung aus Gaspumpe P1 bzw. P2 und einem Absperrventil V1 bzw. V2 enthält. Einer der beiden Ansaugzweige, z. B. $l_{11}$, ist in Betrieb, der andere dient als Reservezweig und wird im Falle der Störung und Abschaltung des in Betrieb befindlichen Ansaugzweiges automatisch eingeschaltet, so daß die Störung im kranken Ansaugzweig beseitigt, z. B. die Gaspumpe P1 ausgewechselt werden kann. Die Gaspumpen P1, P2 sind bevorzugt Membranverdichter-Vakuumpumpen, und zwar von solcher Bauart, bei der das Pumpengehäuse aus hochwertigen, chemisch beständigen Kunststoffteilen besteht. Der Membranantrieb erfolgt durch einen Spaltpolmotor mittels Exzenter. Die Pumpe ist wellendichtungsfrei, dadurch völlig gasdicht. Durch Einsatz besonderer Lager hat sie einen sehr geräuscharmen Lauf. Sie ist insbesondere sehr laufruhig, hat kleine Abmessungen und ist für den Dauerbetrieb geeignet.

Im allgemeinen gewährleisten zwei parallele Ansaugzweige eine ausreichende Redundanz für einen kontinuierlichen Betrieb; in Sonderfällen könnten auch mehr als zwei parallele Ansaugzweige $l_1$ vorgesehen sein, wenn die Probennahme-Zeiträume länger als drei Monate dauern und/oder wenn bei Ausfall eines Ansaugzweiges dieser nicht sofort repariert werden soll. Es wurde angenommen, daß der Ansaugzweig $l_{11}$ in Betrieb ist. Dann wird durch die Gaspumpe P1 ein Gasstrom $g_0$ von z. B. ca. 3 l/min aus dem Abgaskamin entnommen und dem Verzweigungspunkt 3 zugeführt (die Anschlußpunkte des Ansaugzweiges $l_{12}$ an die Ansaugleitung $l_0$ werden mit 1 und 2 bezeichnet). Von diesem Verzweigungspunkt 3 wird der größte Anteil des Gasstromes $g_0$ als Hauptstrom $g_A$ über eine staudruckerzeugende Kanalverengung K und eine Rückführleitung $l_6$ in den Abluftkamin zurückgeführt, d.h. die Rückspeisung erfolgt über das Leitungsstück $l_7$.

Die Kanalverengung K ist eine sogenannte Bypaß-Kapillare, die bei einem Durchsatz von etwa 2,9 l/min für einen Staudruck am Verzweigungspunkt 3 von etwa 0,4 bar sorgt, der für die Funktion des noch zu erläuternden Steuerventils V3, welches den Meßgasstrom $g_B$ steuert, erforderlich ist. Der Verzweigungspunkt 3 führt also den Staudruck als Bezugsdruck, und von ihm wird der kleinere Anteil des Gasstromes von z. B. 50 $cm^3$/min als Meßgasstrom über das bereits erwähnte, die Durchflußmenge pro Zeiteinheit angenähert konstanthaltendes Stellventil V3 und einen Mengenstromzähler MDM in Form eines Massendurchflußmessers, vorzugsweise thermischen Massendurchflußmessers, sowie über ein Umschaltventil V4 durch einen der beiden Sammelzweige $l_{41}$ oder $l_{42}$ hindurchgeleitet. Das Umschaltventil V4 ist ein hand- oder elektromagnetbetätigtes Dreiwegeventil; die dargestellte Schaltstellung III ist eine Zwischenstellung, welche der Steuerkörper des Ventils einnimmt, wenn das Ventil von seiner Stellung I (Sammelzweig $l_{41}$ eingeschaltet) in seine Stellung II (Sammelzweig $l_{42}$ eingeschaltet) umgeschaltet werden soll.

Der erste Sammelzweig $l_{41}$ enthält die Reihenschaltung aus dem eigentlichen, ein Natronlaugenbad enthaltenden Sammelgefäß A1 und einem diesem Sammelgefäß A1 vorgeschalteten Sicherheitsgefäß S1. Sammel- und Sicherheitsgefäß A1, S1 werden in bevorzugter Ausführung als Absorptionsflasche und als Sicherheitsflasche ausgefürt, wie weiter unten noch erläutert. Der Natronlaugespiegel im Sammelgefäß A1 ist mit N bezeichnet, entsprechend auch beim Sammelgefäß A2 im zweiten Sammelzweig $l_{42}$. Dem Sammelgefäß A1

ist im ersten Sammelzweig $l_{41}$ ein Absperrventil VA1 nachgeschaltet, welches vor Entnahme des Sammelgefäßes A1 geschlossen wird. Außerdem ist ein Belüftungsventil VB1, das man auch als Druckausgleichsventil bezeichnen könnte, dem Sicherheitsgefäß S1 vorgeschaltet, damit beim Entkuppeln oder Entnehmen des Sammelgefäßes A1 nicht ein plötzlicher Abbau eines etwaigen Unterdruckes auftreten kann, der zum Verspritzen von Natronlauge führen könnte. Parallel zum ersten Sammelzweig $l_{41}$ ist der zweite Sammelzweig $l_{42}$ geschaltet, der gleichartig zum ersten Sammelzweig aufgebaut ist, nämlich in Reihe zum Sicherheitsgefäß S2 das Sammelgefäß A2 mit Natronlaugebad und diesem nachgeschaltet das Absperrventil VA2 enthält, ferner das Belüftungsventil VB2, angeschlossen an den zum Sicherheitsgefäß S2 führenden Leitungsteil.

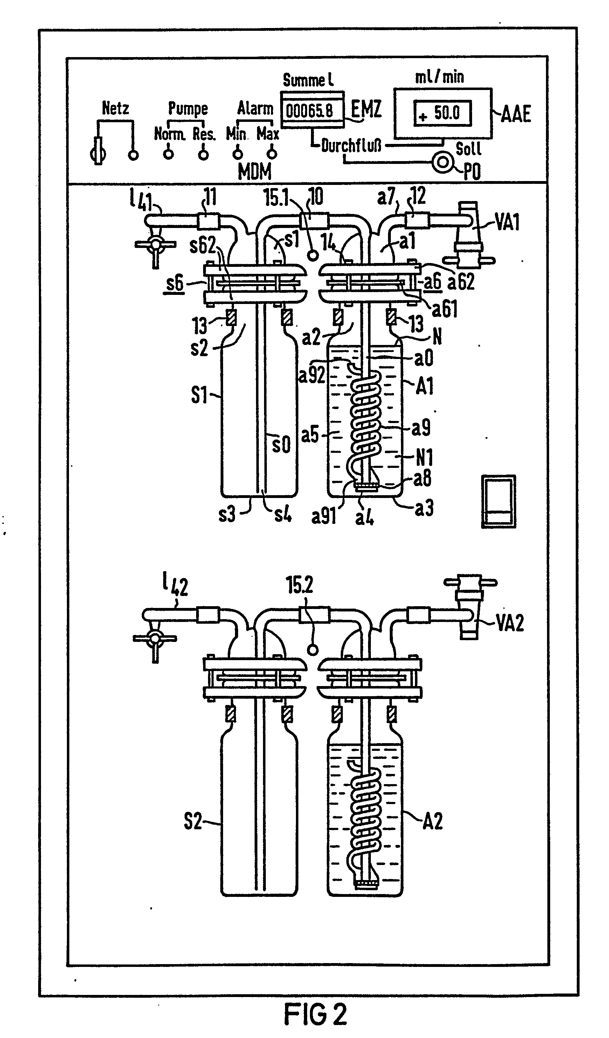

Mindestens ein solcher zweiter Sammelzweig $l_{42}$ muß entweder, wie dargestellt, fest installiert sein, damit bei Beendigung des Probennahme-Intervalls für das erste Sammelgefäß A1 sofort umgeschaltet werden kann. Auf jeden Fall muß aber das zweite gleichartige Sammelgefäß A2 kurz vor Entnahme des ersten Sammelgefäßes A1 zur Verfügung stehen, d.h. eingefügt sein und mittels des Umschaltventils V4 in den Meßgasstrom $g_B$ einschaltbar sein. Im allgemeinen genügen zwei parallele Sammelzweige $l_4$, es können aber in Sonderfällen auch mehr als zwei parallele Sammelzweige vorgesehen sein. Wesentlich ist jedenfalls, daß die Meßgasmenge $g_B$ auf die Natronlaugenmenge im jeweiligen Sammelgefäß A1, A2 so abgestimmt ist, daß während des vorgegebenen Probennahme-Intervalls, das im vorliegenden Fall im allgemeinen drei Monate beträgt, die Natronlauge im betreffenden Sammelgefäß nicht gewechselt oder ergänzt werden muß. Nach Durchströmen des einen, gerade eingeschalteten bzw. in Betrieb befindlichen Sammelzweiges $l_{41}$ oder $l_{42}$ strömt das Meßgas $g_B$ über den Verzweigungspunkt 5 in die Rückführleitung $l_5$, wobei es den größten Anteil von $^{14}CO_2$ im Natronlaugebad N1 verloren hat; der Abscheidegrad liegt beim dargestellten Beispiel bei mehr als 99 %. Dieses entreicherte Meßgas ist mit $g'_B$ bezeichnet, es fließt ebenso wie der Hauptstrom $g_A$ dem Verzweigungspunkt 6 zu und von da zusammen mit dem Hauptstrom $g_A$ über das letzte Leitungsstück $l_7$ zurück zum Kamin. Wie es Fig. 2 zeigt, sind die Sammelgefäße A1, A2 in den beiden Sammelzweigen $l_4$ nach Fig. 1 jeweils als Absorptionsflaschen ausgeführt, welche ein in etwa zentrisch angeordnetes, durch den Flaschenkopf a1 und Flaschenhals a2 sowie durch die Absorptionsflüssigkeit N1 zum Flaschenboden a3 führendes und dort mit einem Gasverteilkopf bzw. einer Fritte a4 versehenes Meßgaseinleitrohr a0 aufweisen. Oberhalb des Absorptionsflüssigkeitsspiegels, auch abgekürzt als "Badspiegel" N zu bezeichnen, ist zwecks leichter De- und Remontage des Flaschenkörpers a5 mit dem Laugenbad N1 eine lösbare, gasdichte Flanschverbindung a6 zwischen Kopf a1 und Hals a2 angeordnet, welche als Sicherung gegen Verbacken der aufeinander gepreßten Dichtflächen von Flaschenhals a2 und -kopf a1 dazwischengelegte Teflon-Dichtungsscheiben a61 aufweist. Die Absorptions- und die Sicherheitsflasche A1, S1 bestehen insbesondere aus laugen- und säureresistentem Glas, wobei das im Flanschbereich feingeschliffene Glas ohne Dichtungszwischenlagen besonders zum Haften oder Zusammenbacken neigen würde. Vom Flaschenkopf a1 führt die an diesen angeschlossene Meßgasrückleitung a7 zum Absperrventil VA1. Der Absorptionsflasche A1 ist eine normalerweise von Absorptionsflüssigkeit freie Sicherheitsflasche S1 gasströmungsmäßig vorgeschaltet, wie auch schon aus dem Schaltbild nach Fig. 1 erkennbar. Deren Gaszufürleitung $l_{41}$ ist an den Flaschenkopf s1 angeschlossen, und die Gasverbindungsleitung s0 zur nachgeschalteten Absorptionsflasche A1 besteht aus einem mit dem Meßgaseinleitrohr a0 kommunizierenden, in etwa zentrisch in der Sicherheitsflasche angeordneten Verbindungsrohr, welches kurz oberhalb des Flaschenbodens s3 eine Einlaßmündung s4 hat und durch den Flaschenkopf s1 herausgeführt ist. Mit 10 ist eine gasdichte Kupplungshülse zwischen dem Verbindungsrohr s0 und dem Meßgaseinleitrohr a0 bezeichnet, weitere gasdichte Kupplungshülsen sind im Zuge der Leitung $l_{41}$ vor der Sicherheitsflasche S1 und in der Leitung a7 hinter der Absorptionsflasche A1 angeordnet und mit 11 bzw. 12 bezeichnet. Auch die Sicherheitsflasche S1 weist eine gasdichte Flanschverbindung s6 auf, die analog zu derjenigen der Absorptionsflasche A ausgegebildet ist. Beide Flaschen A1 und S1 sind mittels zangenartiger Halteschellen 13, welche in ihrem Halsbereich a2 bzw. s2 angreifen, gehaltert. Diese Schellen gestatten ein bequemes De- und Remontieren der Flaschen A1, S1 gegebenenfalls in Verbindung mit den Flanschverbindungen a6, s6. Letztere weisen Spannringe a62 bzw. s62 auf, welche die Ringflansche am Flaschenhals a2 und am Flaschenkopf a1 hintergreifen und durch flaschenaxiale Spannschrauben 14 zueinander verspannbar sind, so daß zusammen mit den eingelegten Teflonringen a61 die Ringflansche völlig gasdicht aufeinander gepreßt werden können. Die Spannschrauben 14 sind über den Umfang der Spannringe a62 verteilt.

Das Meßgaseinleitrohr a0 trägt an seinem unteren Ende den schon erwähnten tellerförmigen Gasverteilkopf bzw. die Fritte a4, welcher mit einem nach oben gerichtete Auslaßöffnungen aufweisenden Düsenkranz versehen ist. Die Auslaßöffnungen sind bei a8 angedeutet. Sie sind unterhalb des Mundstückes a91 einer Gasverzögerungsspirale a9 angeordnet. Letztere umschlingt das Meßgaseinleitrohr a0 und weist im oberen Flaschenbereich, jedoch in der Regel noch unterhalb des Spiegels N des Laugenbades N1, seine Auslaßöffnung a92 auf. Durch den Düsenkranz der Öffnungen a8 wird der durch das Meßgaseinleitrohr a0 zugeführte Meßgasstrom in feine Blasen unterteilt, die von dem trichterförmigen Mundstück a91 aufgefangen und durch die Rohrspirale a9, auch als wendelförmig ausgebildetes Steigrohr zu bezeichnen, aufwärts perlen. Ohne die Rohrspirale wäre die Gasweglänge im Laugenbad höchstens so lang wie die Eintauchhöhe des Meßgaseinleitrohres a0. Durch das wendelförmige Steigrohr bzw. die Gasverzögerungespirale a9 wird die Gasweglänge mehr als vervierfacht und somit eine lange Verweilzeit des Gases erreicht. Die Natronlauge in der Rohrspirale wird durch die aufsteigenden Gasblasen mitgenommen und durch Natronlauge aus dem Reservoir der Flasche A1 ersetzt, d.h. es findet ein Umwälzvorgang statt, der eine lokale Übersättigung verhindert. Diese Umwälzvorgang für die Natronlauge wäre auch dann noch gegeben, wenn durch Wasseraustrag der Laugenfüllstand unter das obere Ende der Rohrspirale absinken sollte.

Wie in der Einleitung bereits erwähnt, ist durch die der Absorptionsflasche A1 gasströmungsmäßig vorgeschaltete Sicherheitflasche S1, die normalerweise leer ist, gewährleistet, daß im Falle eines Überdruckes auf der Abströmseite der Flaschenkolonne S1-A1 Natronlauge keinesfalls austreten kann, sondern lediglich über das Meßgaseinleitrohr a0, die Rohrkupplung 10 und das Verbindungsrohr s0 in die Sicherheitsflasche S1, so lange der Überdruck besteht, gedrückt wird. Von der Sicherheitsflasche kann ein Austritt der Natronlauge in ihre Gaszuströmleitung keinesfalls erfolgen, sondern überschüssiges Gas perlt dann durch das in die Sicherheitsflasche S1 gedrückte Laugen-Reservoir. Bei Beendigung dieser anormalen Druckumkehr und Rückkehr zu normalen Druckverhältnissen, bei welchen der zuströmseitige Druck der Flaschenkolonne S1-A1 wieder größer als der abströmseitige ist, wird die Natronlauge aus der Sicherheitsflasche wieder in die Absorptionsflasche zurückgedrückt, abgesehen von einem kleinen Rest, dessen Höhe durch den Abstand des Mundstückes s4 vom Boden s3 der Sicherheitsflasche S1 gegeben ist. Die Flaschenkolonne S2-A2 im zweiten Sammelzweig $l_{42}$, welche im unteren Teil der Fig. 2 dargestellt ist, ist gleichartig zur oberen Flaschenkolonne S1-A1 ausgebildet, weshalb von einer näheren Erläuterung abgesehen werden kann. Bei V4 erkennt man noch den Kippschalter des Umschaltventils V4 (vgl. Fig. 1). Mit 15.1 bzw. 15.2 sind Kontroll-Lampen bezeichnet, welche anzeigen, ob der betreffende Sammelzweig $l_{41}$ oder $l_{42}$ in Betrieb ist. Die im oberen Teil des Meßschrankes nach Fig. 2 dargestellte Anzeige- und Bedienungsplatine wird erst verständlich nach Erläuterung der elektrischen Meß- und Überwachungsschaltung nach Fig. 3.

Gemäß Fig. 3 ist dem in der Meßleitung $l_3$ nach dem Stellventil V3 angeordneten Massendurchflußmesser MDM (vgl. Fig. 1), welcher eine dem Massendurchfluß analoge Meßspannung erzeugt, ein elektronischer Regler RE über dle Meßleitung e1 und eine mit Anzeige- sowie Auswerteelektronik bezeichnete Baueinheit AAE sowie die Meßleitung e2 nachgeschaltet. Diesem wird die Meßspannung, gegebenenfalls nach Verstärkung, als Durchfluß-Istwert und ein mittels eines Sollwert-Potentiometers PO einstellbarer Durchfluß-Sollwert über Meßleitung e3 zugeleitet. Die im Regler RE gebildete Soll-Istwert-Differenz wird dann über die Signalleitung e4 als Stellgröße dem Stellventil V3 zugeleitet. Die zwischen dem Massendurchflußmesser MDM und dem Regler RE geschaltete Baueinheit AAE "Anzeige- und Auswerteelektronik" weist eine mindestens dreistellige Digitalanzeige für den Momentanwert des Massendurchflusses auf. Dem Baustein AAE ist weiterhin über Signalleitung e5 ein Spannung/Impuls-Umwandler U/f nachgeschaltet, der über Impulsleitung e6 ein elektromechanisches Zählwerk EMZ steuert. Letzteres summiert die Teilmengen der Meßperiode zur Gesamtdurchflußmenge auf. Im dargestellten Beispiel ist dieses Zählwerk EMZ siebenstellig. Über Signalleitung e7 sind dem Baustein AAE noch mindestens zwei Alarmeinrichtungen nachgeschaltet, die bei Über- bzw. Unterschreiten eines eingestellten Durchflußmengenwertes Störmeldung geben. Die beiden Alarmeinrichtungen sind mit SM1 und SM2 bezeichnet, sie liegen in den beiden Signalzweigen e71 und e72. Im Falle einer Störmeldung durch SM1 oder durch SM2 wird unterstellt, daß der gerade in Betrieb befindliche Ansaugzweig, $l_{11}$ oder $l_{12}$ gestört ist. Deshalb wird dieser "kranke" Zweig abgeschaltet durch Schließen seines Absperrventils V1 oder V2 und Abstellen der betreffenden Gaspumpe, und der andere, parallelgeschaltete "gesunde" Zweig wird eingeschaltet. In diesem Zustand kann dann der Störung im "kranken" Zweig nachgegangen und gegebenenfalls die defekte Gaspumpe repariert oder ausgewechselt werden. Mit NT ist in Fig. 3 noch der Netzteil bezeichnet, von dem die Stromversorgungsleitungen e81 - e84 zu den einzelnen Bausteinen der Meß- und Überwachungsschaltung nach Fig. 3 führen, nämlich zu den Alarmeinrichtungen SM1, SM2, zu dem Umwandler U/f, zu dem Baustein AAE und zum Regler RE. Die in Fig. 3 dargestellten Bausteine der elektronischen Schaltung kehren zum Teil auf der frontseitigen Meß- und Bedienungsplatine in Fig. 2 wieder. Der Massendurchflußmesser MDM ist bevorzugt ein thermischer Massendurchflußmesser. Dieser besteht im allgemeinen (nicht näher dargestellt) aus einem Edelstahlrohr mit einer Heizwicklung in der Mitte und zwei beiderseits angeordneten Meßwicklungen. Die in der Heizwicklung erzeugte Wärmemenge wird von dem Fluid zu den Meßwicklungen geleitet. Die dort auftretende Temperaturdifferenz steigt mit der Durchflußmenge von Null bis zu einem Maximalwert an und wird in der Auswerteelektronik AAE mit einer empfindlichen Brückenschaltung gemessen. Da der Wärmetransport an die Massenteilchen gebunden ist, verhält sich der Meßwert proportional zur durchströmenden Masse. Die Heiz- und Meßwicklungen sind so angebracht, daß sie nicht direkt mit dem durchströmenden Medium in Berührung kommen und damit gegen einen eventuellen korrosiven Angriff geschützt sind. Die in der Brückenschaltung (nicht näher dargestellt) erzeugte Spannung wird in der Auswerteelektronik AAE verstärkt. Die Ausgangsspannung beträgt Null bis 5 Volt. Der Momentanwert wird mit der in Fig. 3 dargestellten dreistelligen Digitalanzeige angezeigt. Die von dem Spannungs/Impuls-Umwandler U/f erzeugten Impulse betreiben das schon erwähnte siebenstellige elektromechanische Zählwerk. Bei einem eventuellen Netzausfall werden die gesamte Elektronik und die Pumpenspannung ausfallen, der Gesamtdurchflußwert bleibt aber in dem elektromechanischen Zählwerk erhalten. Tritt die Netzspannung wieder auf, läuft die Pumpe an, die Mengenregelung wird wieder aktiv, und zu dem ursprünglichen Integralwert werden die neuen Ergebnisse addiert. Das Durchflußmeßsignal dient, wie bereits erwähnt, dazu, bei Über- bzw. Unterschreiten eines eingestellten Wertes durch potentialfreie Kontakte Störmeldung zu geben (Anzeige am Gerät und an der Warte). Beim Unterschreiten des Minimalwertes wird - wenn man unterstellt, daß der Ansaugzweig $l_{11}$ in Betrieb ist - die Reservepumpe P2 eingeschaltet und das Ventil V2 geöffnet. Die Pumpe P1 wird ausgeschaltet und Ventil V1 geschlossen.

Bei ordnungsgemäßem Betrieb der Probensammeleinrichtung PSE wird in der eingeschalteten Absorptionsflasche A1 bzw. A2 das Kohlenoxid aus dem Meßgasstrom weitgehend in der Natronlauge zurückgehalten, und zwar mit einem Abscheidegrad von > 99 %. Beim vierteljährlichen Probenwechsel wird - während der eine Sammelzweig noch in Betrieb ist - der andere Sammelzweig frisch präpariert, d.h. die im Labor mit einer Menge von z. B. rund 900 g frischer 0,5 Mol/l-Natronlauge gefüllte Absorptionsflasche eingebaut. Danach wird über das Ventil V4 umgeschaltet und somit eine unterbrechungsfreie Probensammlung gewährleistet. Aus der abgeschalteten Absorptionsstrecke wird die Absorptionsflasche mit der Sammelprobe ausgebaut. Die weitere Verarbeitung der Sammelprobe erfolgt dann im Labor unter geeigneten Arbeitsbedingungen, so daß am Standort der Probensammeleinrichtung nicht mit Absorptionsmittel gearbeitet zu werden braucht. Je nach den Laborgegebenheiten kann dann die C-14-Messung und -Auswertung über eines der folgenden Verfahren erfolgen:

- Direkte LSC-Messung der Absorberlösung (LSC = liquid scintillation counter);
- β-Festpräparatmessung nach $BaCO_3$-Fällung;
- LSG-Messung als $BaCO_3$-Suspension.

**Patentansprüche**

1. Probensammeleinrichtung (PSE) zum Sammeln des radioaktiven Kohlenstoffisotops $^{14}C$, welches in Form von $CO_2$ in der Abluft eines Kernkraftwerkes oder einer anderen kerntechnischen Anlage enthalten ist, wobei
- ein aus der Kaminabluft entnommener Gasstrom ($g_0$) über Filter (FO) und eine Pumpe (P1, P2) sowie einen von mindestens zwei jeweils ein Absperrventil (V1, V2) enthaltenden Ansaugzweigen ($l_{11}$, $l_{12}$) einem Verzweigungspunkt (3) zugeführt und
- von diesem Verzweigungspunkt (3) der größte Anteil ($g_A$) des Gasstromes ($g_0$) über eine Rückführleitung ($l_6$) in den Abluftkamin zurückgeführt und
- der andere Anteil des Gasstromes als Meßgasstrom ($g_B$) mindestens zwei parallel zueinander geschalteten und abwechselnd einschaltbaren Sammelzweigen ($l_{41}$, $l_{42}$) mit je einem Sammelgefäß (A1, A2) sowie Vor- und Nachschaltventilen (V4; VA1, VA2) zuführbar und nach Durchströmen des betreffenden Sammelzweiges ($l_{41}$, $l_{42}$) als entreichertes Meßgas ($g'_B$) in den Abluftkamin zurückführbar ist,
<u>gekennzeichnet</u> durch die folgenden Merkmale:
- jeder der Ansaugzweige ($l_{11}$;$l_{12}$) weist eine eigene Meßgaspumpe (P1 bzw. P2) auf, wobei der jeweils nicht eingeschaltete Ansaugzweig als Reservezweig dient, der bei Störung und Abschaltung des parallelen Ansaugzweiges aktivierbar ist;
- der Verzweigungspunkt (3) ist einer staudruckerzeugenden Kanalverengung (K) vorgeschaltet, und von dem den Staudruck als Bezugsdruck führenden Verzweigungspunkt (3) wird der Meßgasstrom ($g_B$) über ein die Durchflußmenge pro Zeiteinheit angenähert konstant haltendes Stellventil (V3) und einen Mengenstromzähler (MDM) sowie ein Umschaltventil (V4) durch einen der beiden Sammelzweige ($l_{41}$ bzw. $l_{42}$) geleitet und
- beide Sammelzweige ($l_{41}$ bzw. $l_{42}$) enthalten je ein Sammelgefäß (A1 bzw. A2) mit einem Natronlaugenbad (N1), wobei die während des Probennahme-Intervalls hindurchgeleitete Meßgasmenge auf die Absorptionskapazität der Natronlaugenmenge des jeweils eingeschalteten Sammelgefäßes (A1 bzw. A2) abgestimmt ist.

2. Einrichtung nach Anspruch 1, <u>dadurch gekennzeichnet</u>, daß die Sammelgefäße (A1, A2) in den Sammelzweigen ($l_{41}$, $l_{42}$) jeweils als Absorptionsflaschen ausgeführt sind, welche ein etwa zentrisch angeordnetes, durch den Flaschenkopf (a1) und -hals (a2) sowie die Absorptionsflüssigkeit (N1) zum Flaschenboden (a3) führendes und dort mit einem Gasverteilkopf (a4) versehenes Meßgaseinleitrohr (a0) aufweisen, und daß an den oberhalb des Absorptionsflüssigkeitsspiegels (N) angeordneten Flaschenkopf eine Meßgasrückleitung (a7) angeschlossen ist.

3. Einrichtung nach Anspruch 2, dadurch gekennzeichnet, daß dem Sammelgefäß (A1 bzw. A2) in Form der Absorptionsflasche eine normalerweise von Absorptionsflüssigkeit freie Sicherheitsflasche (S1 bzw. S2) gasströmungsmäßig vorgeschaltet ist, deren Gaszuführleitung ($l_{41}$ bzw $l_{42}$) an den Flaschenkopf (S1) angeschlossen ist und deren Gasverbindungsleitung (S0) zur nachgeschalteten Absorptionsflasche aus einem mit dem Meßgaseinleitrohr (a0) kommunizierenden, in etwa zentrisch in der Sicherheitsflasche angeordnetem Verbindungsrohr besteht, welches kurz oberhalb des Flaschenbodens (S3) eine Einlaßmündung (S4) hat und durch den Flaschenkopf (S1) herausgeführt ist.

4. Einrichtung nach Anspruch 2, dadurch gekennzeichnet, daß die Absorptionsflasche (A1 bzw. A2) in ihrem Halsbereich zwecks- De- und Remontage mit einer lösbaren, gasdichten Flanschverbindung (a6) versehen ist, welche als Sicherung gegen Verbacken der aufeinandergepreßten Dichtflächen dazwischengelegte Teflon-Dichtungsscheiben (a61) aufweist.

5. Einrichtung nach einem der Ansprüche 2 bis 4, dadurch gekennzeichnet , daß ein tellerförmiger Gasverteilkopf (a4) am unteren Ende des Meßgaseinleitrohres (a0) angeordnet und mit einem nach oben gerichtete Auslaßöffnungen (a8) aufweisenden Düsenkranz versehen ist und daß die Auslaßöffnungen (a8) unterhalb des Mundstücks (a91) einer Gasverzögerungsspirale (a9) angeordnet sind, welche das Meßgaseinleitrohr (a0) umschlingt und im oberen Flaschenbereich und im Normalfall noch unterhalb des Spiegels (N) der Absorptionsflüssigkeit (N1) seine Auslaßöffnung (a92) aufweist.

6. Einrichtung nach Anspruch 1, dadurch gekennzeichnet, daß einem in der Meßleitung ($l_3$) nach dem Stellventil (V3) angeordneten Massendurchflußmesser (MDM), welcher eine dem Massendurchfluß analoge Meßspannung erzeugt, ein elektronischer Regler (RE) nachgeschaltet ist, dem die Meßspannung, gegebenenfalls nach Verstärkung, als Durchfluß-Istwert und ein mittels eines Sollwertpotentiometers (PO) einstellbarer Durchfluß-Sollwert zugeleitet wird, und daß die im Regler (RE) gebildete Soll-Istwert-Differenz als Stellgröße für das Stellventil (V3) dient.

7. Einrichtung nach Anspruch 6, gekennzeichnet durch eine zwischen Massendurchflußmesser (MDM) und Regler (RE) geschaltete Auswerte-Elektronik (AAE) mit einer mindestens dreistelligen Digitalanzeige für den Momentanwert des Massendurchflusses und einen der Auswerte-Elektronik nachgeschalteten Spannung/Impuls-Umwandler (U/f) zur Steuerung eines elektromechanischen Zählwerkes (EMZ), welches die Durchflußmenge der Meßperiode aufsummiert.

8. Einrichtung nach Anspruch 1 und 7, dadurch gekennzeichnet, daß an die Auswerte-Elektronik (AAE) mindestens zwei Alarmeinrichtungen (SM1, SM2) angeschlossen sind, die bei Über- bzw. Unterschreiten eines eingestellten Durchflußmengenwertes Störmeldung geben, wobei eine Umschaltung auf den anderen intakten Ansaugzweig ($l_{12}$ bzw. $l_{11}$) erfolgt.

9. Einrichtung nach Anspruch 6, gekennzeichnet durch einen thermischen Massendurchflußmesser (MDM).

10. Einrichtung nach Anspruch 1, gekennzeichnet durch Membranverdichter-Vakuumpumpen als Gaspumpen (P1 bzw. P2).

## Claims

1. A sample collecting device (PSE) for collecting the radioactive carbon isotope $^{14}C$ which is contained in the form of $CO_2$ in the exhaust from a nuclear power station or other nuclear installation, wherein
- a gas stream ($g_0$) withdrawn from the flue exhaust is fed through filters (FO) and a pump (P1, P2), and through one of at least two suction branches ($l_{11}$, $l_{12}$), each of which contains a shutoff valve (V1, V2), to a branching point (3) and
- from this branching point (3), the major part ($g_A$) of the gas stream ($g_0$) is returned through a return line ($l_6$) to the exhaust flue and
- the other part of the gas stream, as the gas stream ($g_B$) to be measured, can be fed to at least two collecting branches ($l_{41}$, $l_{42}$), connected in parallel and alternately actuatable, each of which branches has a collecting vessel (A1, A2) and preceding and following valves (V4; VA1, VA2), and, having passed through the particular collecting branch ($l_{41}$, $l_{42}$), can be returned to the exhaust flue as depleted measured gas ($g'_B$), characterised by the following features:
- each of the suction branches ($l_{11}$, $l_{12}$) has its own measuring gas pump (P1, P2), the suction branch which is not switched-in serving as a reserve branch which can be switched-in when the parallel suction branch is out of order and has been disconnected;
- the branching point (3) is preceded by a channel constriction (K) which produces a pressure head, and from the branching point (3), which carries the pressure head as a reference pressure, the measuring gas stream ($g_B$) is fed through a control valve (V3) which maintains the flow per unit of time approximately constant and a flowmeter (MDM), and by way of a switching valve (V4), through one of the two collecting branches ($l_{41}$ and $l_{42}$), and
- the two collecting branches ($l_{41}$ and $l_{42}$) each contain a collecting vessel (A1, A2) containing a caustic soda bath (N1), the quantity of measuring gas which passes through during the sampling interval is adapted to the absorptive capacity of the amount of caustic soda present in the collecting vessel (A1, A2) which is switched-in.

2. A device as claimed in Claim 1, characterised in that the collecting vessels (A1, A2) in the collecting branches ($l_{41}$, $l_{42}$) each consist of absorption bottles having a measuring gas inlet pipe (a0) which is arranged approximately centrally, and which leads through the head (a1) and neck (a2) of the bottle and through the absorption liquid (N1) to the bottom of the bottle (a3), where it is provided with a gas distributing head (a4); and that a measuring gas return line (a7) is connected to the top of the bottle above the level of the absorption liquid (N).

3. A device as claimed in Claim 2, characterised in that the collecting vessel (A1, A2), in the form of the absorption bottle, is preceded in the direction of the gas flow by a safety bottle (B1, B2) which is normally free from absorption liquid, whose gas supply line ($l_{41}$ and $l_{42}$) is connected to the bottle head (S1) and whose gas connecting line (S0) to the following absorption bottle consists of a connecting pipe which communicates with the measuring gas inlet pipe (a0), is located approximately centrally in the safety bottle, and has an inlet opening (S4) located a short distance above the bottom (S3) of the bottle and leads out through the bottle head (S1).

4. A device as claimed in Claim 2, characterised in that in its neck region, the absorption bottle (A1, A2) is provided for disassembly and reassembly purposes, with a detachable gas-tight flanged connection (a6) which, to prevent binding of the sealing surfaces when these are pressed against one another, is provided with interposed teflon sealing washers (a61).

5. A device as claimed in one of Claims 2 to 4, characterised in that a dish-shaped gas distributing head (a4) is arranged at the lower end of the measuring gas inlet pipe (a0) and is provided with a nozzle ring which has upwards directed outlet openings (a8); and that the outlet openings (a8) are arranged below the mouth piece (a91) of a gas delay spiral (a9) which surrounds the measuring gas inlet pipe (a0) and whose outlet opening (a92) is located in the upper part of the bottle and normally below the level (N) of the absorption liquid (N1).

6. A device as claimed in Claim 1, characterised in that a flowmeter (MDM) which is arranged in the measuring line ($l_3$) downstream of the control valve (V3) and which generates a measuring voltage which is an analogue of the flow, and is connected at its output end to an electronic regulator (RE) which is supplied with the measuring voltage, possibly after amplification, as the actual value of the flow and with a theoretical value for the flow which can be adjusted by means of a theoretical value potentiometer (PO); and that the theoretical value-actual difference formed in the regulator (RE) serves as a regulating variable for the control valve (V3).

7. A device as claimed in Claim 6, characterised by an electronic analysis unit (AAE) which is connected between the flowmeter (MDM) and the regulator (RE) and which comprises a digital display having at least three positions for the instantaneous value of the flow, and a voltage/pulse-converter (U/f) which is connected to the output end of the electronic analysis unit and serves to control an electro-mechanical counter (EMZ) which sums the amount of flow of the measuring period.

8. A device as claimed in Claim 1 and 7, characterised in that the electronic analysis unit (AAE) is connected to at least two alarm devices (BM1, BM2) which, when a given flow value is overshot or undershot, gives an alarm, whereupon a switch-over takes place to the other, intact suction branch ($l_{12}$, $l_{11}$).

9. A device as claimed in Claim 6, characterised by a thermal flowmeter (MDM).

10. A device as claimed in Claim 1, characterised by diaphragm compressor vacuum pumps as gas pumps (P1, P2).

**Revendications**

1. Dispositif de prélèvement d'échantillons (PSE) destiné à recueillir l'isotope radioactif du carbone 14 contenu, sous forme de $CO_2$, dans l'air résiduaire d'une centrale nucléaire ou d'une autre installation de génie nucléaire, dans lequel:
- un courant gazeux ($g_0$) prélevé de l'air résiduaire de la cheminée est envoyé à un point de dérivation (3), en passant par un filtre (FO) et par une pompe (P1, P2) ainsi que par au moins deux dérivations d'aspiration ($l_{11}$, $l_{12}$) contenant chacune une vanne d'arrêt (V1, V2) et
- la plus grande partie ($g_A$) du courant gazeux ($g_0$) est envoyée de ce point de dérivation (3) à la cheminée pour l'air résiduaire en passant par un conduit de retour (16), et
- l'autre partie du courant gazeux peut être envoyée, en tant que courant gazeux à mesurer ($g_B$), à au moins deux dérivations collectrices ($l_{41}$, $l_{42}$) montées en parallèle, pouvant être branchées alternativement et ayant chacune un réservoir collecteur (A1, A2), ainsi que des vannes d'arrêt amont et aval (VA ; VA1, VA2) et peut être retournée à la cheminée pour l'air résiduaire, en tant que gaz à mesurer enrichi ($g'_B$), après avoir passé dans la dérivation collectrice ($l_{42}$, $l_{42}$) concernée, remarquable par les caractéristiques suivantes :
- chacune des dérivations collectrices ($l_{11}$, $l_{12}$) comporte sa propre pompe pour le gaz à mesurer (P1 et P2), la dérivation d'aspiration qui n'est pas branchée servant de dérivation de réserve, qui peut être mise en action en cas de panne et de débranchement de la branche parallèle d'aspiration;
- le point de dérivation (3) est monté en amont d'un étranglement (K) produisant une pression dynamique, et du point de dérivation (3), donnant la pression dynamique en tant que pression de référence, le courant de gaz à mesurer ($g_B$) est envoyé dans l'une des deux dérivations collectrices ($l_{41}$ et $l_{42}$) en passant par une vanne de réglage (V3) maintenant à peu près constante la quantité débitée par unité de temps et par un compteur totalisant les quantités de courant (MDM), ainsi que par une vanne inverseuse (V4), et

- les deux dérivations collectrices ($l_{41}$ et $l_{42}$) comportent chacune un réservoir (A1 et A2) avec un bain de lessive de soude (N), la quantité de gaz à mesurer qui passe pendant les intervalles de prélèvement d'échantillon étant ajustée à la capacité d'absorption de la quantité de lessive de soude du réservoir (A1 et A2) qui est branché.

2. Dispositif suivant la revendication 1, caractérisé en ce que les réservoirs (A1, A2) des dérivations collectrices ($l_{41}$, $l_{42}$) sont constitués respectivement en bouteille d'absorption, qui comporte un tube d'introduction du gaz à mesurer (a0) disposé à peu près au centre, passant dans la tête (a1) et dans le goulot (a2) de la bouteille, et conduisant le liquide d'absorption (N1) au fond (a3) de la bouteille où il est muni d'une tête de répartition du gaz (a4), et en ce qu'à la tête de bouteille disposée au-dessus du niveau du liquide d'absorption (N) est raccordé un conduit de retour (a7) pour le gaz a mesurer.

3. Dispositif suivant la revendication 2, caractérisé en ce qu'en amont, suivant le sens du courant du gaz, du réservoir (A1 et A2) en forme de bouteille d'absorption est montée une bouteille de sécurité (S1 et S2) exempte de liquide d'absorption, dont le conduit d'amenée du gaz ($l_{41}$ et $l_{42}$) est raccordé à la tête de bouteille (S1) et dont le conduit de liaison pour le gaz (S0) allant à la bouteille d'absorption montée en aval est constitué d'un tube de liaison communiquant avec le tube d'introduction du gaz à mesurer (a0), disposé sensiblement au centre de la bouteille de sécurité, ayant une embouchure d'entrée (S4) juste au-dessus du fond (S3) de la bouteille et sortant par la tête (S1) de la bouteille.

4. Dispositif suivant la revendication 2, caractérisé en ce que la région du goulot de la bouteille d'absorption (A1 et A2) est munie, en vue du démontage et du remontage, d'un raccord à brides (a6) amovible et étanche au gaz qui comporte, comme sécurité contre le collage des surfaces d'étanchéité pressées l'une sur l'autre, des disques d'étanchéité (a61) interposés en téflon.

5. Dispositif suivant l'une des revendications 2 à 4, caractérisé en ce qu'une tête de répartition du gaz (a4) en forme de plateau est disposée à l'extrémité inférieure du tube d'introduction du gaz à mesurer (a0) et est munie d'une couronne de buse comprenant des orifices de sortie (a8) dirigés vers le haut, et en ce que les orifices de sortie (a8) sont disposés en-dessous de l'embout (a91) d'un serpentin (a9) retardant le gaz, s'enroulant autour du tube d'introduction du gaz à mesurer (a0) et ayant son ouverture de sortie (a92) dans la partie supérieure de la bouteille et, dans le cas du fonctionnement normal, en-dessous du niveau (N) du liquide d'absorption (N1).

6. Dispositif suivant la revendication 1, caractérisé en ce qu'en aval d'un débitmètre massique (MDM), disposé dans le conduit de mesure ($l_3$), après la vanne de réglage (V3) et produisant une tension de mesure représentative du débit massique, est monté un régulateur électronique (RE) auquel est envoyée la tension de mesure, le cas échéant après amplification, en tant que valeur réelle du débit et une valeur de consigne du débit réglable au moyen d'un potentiomètre de valeur de consigne (PO), et en ce que la différence entre la valeur de consigne et la valeur réelle formée dans le régulateur (RE) sert de grandeur de réglage pour la vanne de réglage (V3).

7. Dispositif suivant la revendication 6, caractérisé par une électronique d'exploitation (AAE) montée entre le débitmètre massique (MDM) et le régulateur (RE) et ayant un affichage numérique à au moins trois chiffres pour la valeur instantanée du débit massique, et par un transducteur tension/impulsion (U/f) monté en aval de l'électronique d'exploitation et destiné à commander un compteur électromécanique (EMZ) qui fait le total de la quantité débitée pendant la période de mesure.

8. Dispositif suivant la revendication 1 et 7, caractérisé en ce qu'à l'électronique d'exploitation (AAE) sont raccordés au moins deux dispositifs d'alerte (SM1, SM2) qui, dans le cas où la valeur réglée pour la quantité débitée dépasse une certaine valeur ou est inférieure à une certaine valeur, donnent une indication de dérangement, de manière à effectuer une sur l'autre dérivation intacte d'aspiration ($l_{12}$, et $l_{11}$).

9. Dispositif suivant la revendication 6, caractérisé par un débitmètre massique (MDM) fonctionnant par voie thermique.

10. Dispositif suivant la revendication 1, caractérisé par des pompes à vide à compresseur à membrane servant de pompes pour le gaz (P1 et P2).

FIG 1

FIG 3

FIG 2